# EUROPÄISCHE PATENTSCHRIFT

(11) **EP 1 320 161 B1**
(45) Veröffentlichungstag und Bekanntmachung des Hinweises auf die Patenterteilung: **17.05.2006**
(21) Anmeldenummer: 02023320.1
(22) Anmeldetag: 18.10.2002
(51) Int. Cl.: H02G 3/10

(54) **Geräteträger für Leitungsführungskanäle**
Apparatus support for cable channels
Support d'appareillage pour goulottes

(30) Priorität: 11.12.2001 DE 20120026 U
(43) Veröffentlichungstag der Anmeldung: 18.06.2003
(73) Patentinhaber: Tehalit GmbH, 67716 Heltersberg (DE)
(72) Erfinder: Ostertag, Christian, 67240 Bischwiller (FR); Arnold, Hans-Joachim, 67706 Krickenbach (DE)
(74) Vertreter: Patentanwälte Möll und Bitterich

(56) Entgegenhaltungen:
- EP-A- 1 087 486
- EP-A- 1 137 142
- FR-A- 2 770 047

## Beschreibung

Die Erfindung betrifft Geräteträger gemäß dem Oberbegriff des Anspruchs 1 für die Montage von Elektro-Installationsgeräten neben senkrecht oder waagerecht verlegten Leitungsführungskanälen, insbesondere Sockelleistenkanälen.

Ein Geräteträger gemäß dem Oberbegriff des Anspruchs 1 ist aus EP-A-1 137 142 bekannt.

Um Elektro-Installationsgeräte, z. B. Steckdosen, an einem Sockelleistenkanal anzubringen, werden spezielle Geräteträger verwendet. Man vergleiche EP 0 159 554 A, EP 0 239 456 A, FR 27 70 047 A oder EP 0 702 442 B oder EP 0 187 486 A. In allen Fällen besitzt der Geräteträger ein Basisteil, welches neben dem Sockelleistenkanal an der Wand befestigt wird, wozu in der Bodenplatte Öffnungen für Schrauben und Dübel vorgesehen sind. Auf der Bodenplatte sind Vorrichtungen vorgesehen, an denen das Elektro-Installationsgerät, welches mit korrespondierenden Einrichtungen versehen ist, befestigt wird. Komplettiert wird der Geräteträger durch eine Abdeckhaube, die Bodenplatte und Elektro-Installationsgerät überdeckt.

Eine handelsübliche Art von Elektro-Installationsgeräten besitzt ein etwa quaderförmiges Gehäuse mit rechteckigem oder quadratischem Grundriss, an dem recht und links abstehend eine Haltelasche angeformt ist. Zur Befestigung eines solchen Installationsgerätes besitzen die in der FR 27 70 047 A sowie in der EP 1 087 486 A beschriebenen Geräteträger vier auf der Bodenplatte befestigte Rasthaken. Um das Einschnappen der Haltelaschen zu ermöglichen, sind die Rasthaken federnd. Wird nun aus einer aufgerasteten Steckdose ein fest sitzender Stecker herausgezogen, so wirken erhebliche Kräfte auf die Rasthaken. Da diese federn, können sie zur Seite ausweichen, worauf sich das Installationsgerät vom Geräteträger löst. Damit sind die spannungsführenden Leitungen und Kontakte direkt zugänglich, die elektrische Sicherheit ist nicht mehr gegeben. Das ist unzulässig.

Um zu verhindern, dass sich das Elektrogerät wie beschrieben in unerwünschter Weise vom Geräteträger lösen kann, wird in der FR-A 27 70 047 vorgeschlagen, die Haube mit dem Basisteil zu verschrauben. Dazu ist die Haube mit Schrauböffnungen, das Basisteil mit korrespondierenden Gewindepfosten ausgerüstet. Eine solche Schraubbefestigung ist zwar stabil, jedoch zeit- und damit kostenaufwändig. Außerdem wird das Anbringen der Sicherungsschrauben oft vergessen. Das ist unbefriedigend.

Der vorliegenden Erfindung liegt daher die Aufgabe zugrunde, einen Geräteträger der eingangs genannten Art dahingehend zu verbessern, dass sich die aufgeschnappten Elektrogeräte auch bei großen Zugkräften nicht unbeabsichtigt lösen können.

Diese Aufgabe wird gelöst durch einen Geräteträger mit den Merkmalen des Anspruchs 1.

Der wesentliche Vorteil der vorliegenden Erfindung besteht darin, dass bei abgenommener Haube die das Elektrogerät haltenden Rasthaken frei federn können, wodurch sich das Elektrogerät besonders einfach montieren sowie bei Bedarf auch wieder demontieren lässt, und dass beim Aufrasten der Haube auf das Basisteil die Rasthaken durch an der Innenseite der Haube angeformte Nasen blockiert werden. Ein unbeabsichtigtes Lösen des Elektrogerätes ist daher bei aufgesetzter Haube ausgeschlossen. Sicherungsschrauben sind nicht erforderlich.

Gemäß einer Ausgestaltung der Erfindung sind die Rasthaken auf Federleisten gelagert, vergleichbar der in der FR 27 70 047 A oder der EP 1 087 486 A beschriebenen Konstruktion. In diesem Fall können die an der Innenseite der Haube angeformten Nasen auch diese Federleisten blockieren.

Gemäß einer bevorzugten Ausgestaltung der Erfindung ist der dem Leitungsführungskanal benachbarte Rasthaken starr. Damit wird der Tatsache Rechnung getragen, dass dieser Rasthaken nur schwer mit Hilfe von an der Haube angeformten Nasen blockiert werden kann, weil an dieser Stelle die Leitungen aus dem Kanal in den Geräteträger eingeführt werden und umgekehrt.

Um auch in diesem Fall das Aufsetzen und wieder Lösen des Elektrogerätes auf dem bzw. von dem Geräteträger bei abgenommener Haube bequem durchführen zu können, ist gemäß einer Weiterbildung der Erfindung der dem starren Rasthaken gegenüberliegende Rasthaken mit einer erweiterten Federung ausgerüstet.

Vorteilhafterweise sind am Basisteil und an der Haube Haken, Rippen und/oder Ösen angeformt, die die lösbare Befestigung der Haube ermöglichen. Auf diese Weise lässt sich die Haube besonders schnell montieren und ist gleichzeitig gegen ein ungewolltes Lösen gesichert.

Anhand der Zeichnung soll die Erfindung in Form eines Ausführungsbeispiels näher erläutert werden. Es zeigen jeweils in isometrischer Darstellung
- Fig. 1: ein Basisteil eines Geräteträgers,
- Fig. 2: die Außenseite einer Haube für den Geräteträger der Fig. 1 und
- Fig. 3: die Innenseite der Haube nach Fig. 2.

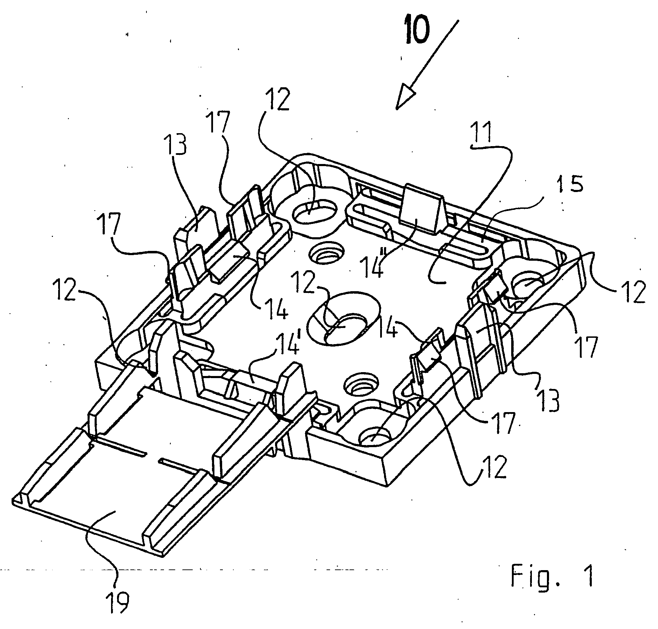

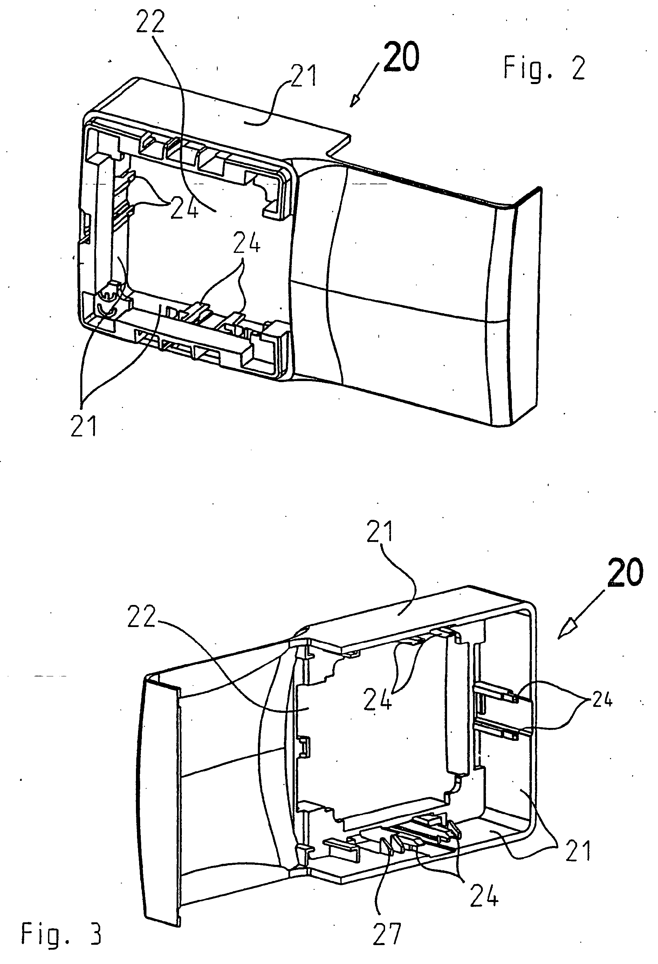

Fig. 1 zeigt in isometrischer Darstellung ein Basisteil 10 eines Geräteträgers für die Montage von Elektro-Installationsgeräten neben senkrecht oder waagerecht verlegten Leitungsführungskanälen. Das Basisteil 10 besitzt eine Bodenplatte 11 mit Befestigungsöffnungen 12 für eine Wandbefestigung. Rechts und links sind an der Bodenplatte 11 Führungsschienen 13 für eine auf das Basisteil 10 aufzusetzende Haube 20 (Fig. 2 und 3) angeformt. Für eine Rastbefestigung der Haube 20 sind neben den Führungsschienen 13 Haken 17 angeformt, die mit entsprechenden Haken 27 bzw. Ösen an der Haube 20 korrespondieren.

An der Unterseite der Bodenplatte 11 erkennt man eine Schürze 19, die in an sich bekannter Weise einen Leitungsführungskanal (nicht dargestellt), z. B. einen Sockelleistenkanal, übergreift und so die erforderliche Systemtrennung der herausgeführten Leitungen bewirkt.

Für eine Rastbefestigung von handelsüblichen Elektro-Installationsgeräten, die mit radial abstehenden Haltelaschen ausgerüstet sind, sind auf der Bodenplatte 11 vier federnde Rasthaken 14, 14', 14" errichtet. Zwecks Verbesserung der Federung sind die Rasthaken 14, 14" auf Federleisten 15 gelagert. Soll ein Elektro-Installationsgerät montiert werden, so wird es einfach von oben auf die Bodenplatte 11 gedrückt. Dabei weichen die federnden Rasthaken 14, 14" zunächst zur Seite aus. Sobald das Elektrogerät korrekt sitzt, federn die Rasthaken 14, 14" wieder zurück und halten das Gerät fest.

Allerdings hat die Erfahrung gezeigt, dass die Rasthaken 14, 14" auch dann wieder zurückweichen, wenn größere Zugkräfte, wie sie beispielsweise beim Ziehen eines fest sitzenden Steckers aus einer Steckdose auftreten, auf sie einwirken. Dabei könnte sich das Elektrogerät mitsamt der Haube 20 vom Basisteil 10 ungewollt lösen. Daraufhin wären die spannungsführenden Drähte und Kontakte frei zugänglich, es bestünde Lebensgefahr. Um dies zu verhindern, besitzt die in den Fig. 2 und 3 dargestellte, zum Basisteil 10 gehörende Haube 20 an ihrer Innenseite an die umlaufenden Wände 21 angeformte Nasen 24. Beim Aufsetzen der Haube 20 auf das Basisteil 10 fahren diese Nasen 24 hinter die Rasthaken 14, 14" und/oder hinter die Federleisten 15 und blockieren diese. Auf diese Weise können die Rasthaken 14, 14" auch bei großen Zugkräften nicht mehr ausweichen, das Elektrogerät sitzt unverrückbar fest auf dem Basisteil 10.

Der der Schürze 19 benachbarte Rasthaken 14' ist im Gegensatz zu den übrigen Rasthaken 14, 14" nicht federnd sondern starr ausgeführt. Da im Bereich der Schürze 19 Leitungen ein- und ausgeführt werden, könnten diese verhindern, dass die Haube 20 aufgesetzt werden kann. Zum Ausgleich ist der dem starren Rasthaken 14' gegenüberliegende Rasthaken 14" mit einer erweiterten Federung ausgerüstet. Es ist somit ohne weiteres möglich, das Elektrogerät zu montieren und gegebenenfalls auch wieder zu lösen.

Schließlich erkennt man an der Innenseite der umlaufenden Wände 21 rechts und links je ein Paar von Haken 27, die mit den Haken 17 am Basisteil 10 korrespondieren und mit diesen zusammen für die Rastbefestigung der Haube 20 auf dem Basisteil 10 verantwortlich sind.

## Patentansprüche

1. Geräteträger für die Montage von Elektroinstallationsgeräten neben senkrecht oder waagerecht verlegten Leitungsführungskanälen, insbesondere Sockelleistenkanälen, mit einer Schürze (19), die den Kanal übergreift, mindestens umfassend
- ein Basisteil (10) mit
-- einer Bodenplatte (11),
-- Befestigungsöffnungen (12) in der Bodenplatte ,
-- seitliche Führungsschienen (13) an der Bodenplatte (11)
-- und federnden Rasthaken (14, 14") für die Schnappbefestigung des Elektrogerätes auf der Bodenplatte (11)
- und eine Haube (20), lösbar aufsetzbar auf das Basisteil (10), mit
-- umlaufenden Seitenwänden (21)
-- und einem zentralen Ausschnitt (22) als Zugang zum Elektrogerät, **gekennzeichnet durch** das Merkmal:
- an der Innenseite der Haube (20) sind Nasen (24) angeformt, die die Rasthaken (14, 14") blockieren.

2. Geräteträger nach Anspruch 1, **gekennzeichnet durch** die Merkmale:
- die Rasthaken (14, 14") sind auf Federleisten (15) gelagert,
- die Nasen (24) blockieren die Federleisten (15).

3. Geräteträger nach Anspruch 1 oder 2, **gekennzeichnet durch** das Merkmal:
- der dem Leitungsführungskanal benachbarte Rasthaken (14') ist starr.

4. Geräteträger nach Anspruch 3, **gekennzeichnet durch** das Merkmal:
- der dem starren Rasthaken (14') gegenüberliegende Rasthaken (14") besitzt eine erweiterte Federung.

5. Geräteträger nach einem der Ansprüche 1 bis 4, **gekennzeichnet durch** das Merkmal:
- am Basisteil (10) und an der Haube (20) sind Haken (17, 27), Rippen und/oder Ösen angeformt, die die lösbare Befestigung der Haube (20) ermöglichen.

## Claims

1. Apparatus support for mounting electrical installation apparatus next to vertically or horizontally installed wiring trunking, in particular skirting trunking, with an apron (19) which engages over the trunking, at least comprising
- a base part (10) with
-- a bottom plate (11),
-- fastening openings (12) in the bottom plate,
-- lateral guide rails (13) at the bottom plate (11)
-- and resilient locking hooks (14, 14") for snap-fastening the electrical apparatus to the bottom plate (11)
- and a hood (20) which can be mounted in a detachable manner on the base part (10) and has
-- circumferential side walls (21)
-- and a central cut-out (22) as access to the electrical apparatus,
**characterised by** the feature:
- lugs (24), which clamp the locking hooks (14, 14"), are formed on the inside of the hood (20).

2. Apparatus support according to Claim 1, **characterised by** the features:
- the locking hooks (14, 14") are mounted on spring strips (15),
- the lugs (24) clamp the spring strips (15).

3. Apparatus support according to Claim 1 or 2, **characterised by** the feature:
- the locking hook (14') adjacent to the wiring trunking is rigid.

4. Apparatus support according to Claim 3, **characterised by** the feature:
- the locking hook (14") lying opposite the rigid locking hook (14') has increased resilience.

5. Apparatus support according to any one of Claims 1 to 4, **characterised by** the feature:
- hooks (17, 27), ribs and/or eyes are formed on the base part (10) and on the hood (20), these enabling the hood (20) to be fastened in a detachable manner.

## Revendications

1. Support d'appareillages pour le montage d'appareils électriques à côté de goulottes de câbles posées verticalement ou horizontalement, en particulier de goulottes plinthes, avec une jupe(19) qui recouvre la goulotte, comprenant au moins
- une pièce de base (10) avec
-- une plaque de fond (11),
-- des ouvertures de fixation (12) dans la plaque de fond,
-- des rails de guidage latéraux (13)par la plaque de fond (11)
-- et des crochets de verrouillage élastiques (14, 14") pour la fixation par clipsage de l'appareil électrique sur la plaque de fond (11)
- et une coiffe (20) à poser de manière amovible sur la pièce de base (10) avec
-- des parois latérales périphériques (21)
-- et une ouverture centrale (22) pour l'accès à l'appareil électrique,
**caractérisé par le fait**
- **que** des ergots (24) qui bloquent les crochets de verrouillage (14, 14'') sont formés sur le côté intérieur de la coiffe (20).

2. Support d'appareillages selon la revendication 1, **caractérisé par le fait**
- **que** les crochets de verrouillage (14, 14") sont montés sur des moulures élastiques (15),
- **que** les ergots (24) bloquent les moulures élastiques (15).

3. Support d'appareillages selon la revendication 1 ou 2, **caractérisé par le fait**
- **que** le crochet de verrouillage (14') adjacent à la goulotte de câbles est rigide.

4. Support d'appareillages selon la revendication 3, **caractérisé par le fait**
- **que** le crochet de verrouillage (14") opposé au crochet de verrouillage (14') rigide possède une élasticité accrue.

5. Support d'appareillages selon l'une des revendications 1 à 4, **caractérisé par le fait**
- **que** des crochets (17, 27), des nervures et/ou des oeillets qui permettent la fixation amovible de la coiffe (20) sont formés sur la pièce de base (10) et sur la coiffe (20).
